# FASCICULE DE BREVET EUROPEEN

(11) **EP 4 268 331 B1**
(45) Date de publication et mention de la délivrance du brevet: **29.01.2025**
(21) Numéro de dépôt: 21843669.9
(22) Date de dépôt: 20.12.2021
(51) Int. Cl.: H01S 3/00, H01S 3/067

(54) **SYSTÈME LASER À FIBRE OPTIQUE À IMPULSION PICOSECONDE DE FORTE ÉNERGIE ACCORDABLE EN DURÉE ET UTILISATION D'UN TEL SYSTÈME LASER**
HOCHLEISTUNGS-PIKOSESEKUNDENLASERSYSTEM MIT GEPULSTER OPTISCHER FASER UND ABSTIMMBARE DAUER SOWIE VERWENDUNG EINES SOLCHEN LASERSYSTEMS
DURATION-TUNABLE HIGH-POWER PICOSESECOND PULSED OPTICAL FIBRE LASER SYSTEM AND USE OF SUCH LASER SYSTEM

(30) Priorité: 23.12.2020 FR 2014061
(43) Date de publication de la demande: 01.11.2023
(73) Titulaire: Ilasis Laser, 33600 Pessac (FR)
(72) Inventeur: DESLANDES, Pierre, 33170 GRADIGNAN (FR); SALIN, François, 33170 GRADIGAN (FR); DELOISON, Florent, 33000 BORDEAUX (FR)
(74) Mandataire: Jacobacci Coralis Harle
(86) Numéro de dépôt international: PCT/EP2021/086833
(87) Numéro de publication internationale: WO 2022/136290

(56) Documents cités:
- EP-A2- 1 712 936
- FR-A1- 2 939 974
- US-A1- 2005 041 702
- US-A1- 2006 120 418

## Description

### Domaine technique

La présente invention concerne le domaine technique des lasers pour produire des impulsions laser femtosecondes (fs) ou picosecondes (ps) de forte puissance crête.

Plus précisément, la présente invention concerne le domaine des lasers à fibre optique, qui permettent de délivrer une impulsion laser à l'extrémité d'un guide d'onde totalement flexible dans toutes les directions, sans détériorer la qualité du faisceau laser.

### Technique antérieure

Les impulsions lasers de durée inférieure à 10 ps sont très recherchées pour des applications très variées comme le micro-usinage ou la chirurgie oculaire. Il est connu que la durée des impulsions est de façon optimale inférieure à 10 ps et une durée proche de 1 ps est en général souhaitable. Afin de pouvoir provoquer une disruption du matériau par plasma induit (Laser induced breakdown), il faut généralement que la puissance crête des impulsions soit supérieure à 1 MW. Une des difficultés rencontrées est de pouvoir amplifier des impulsions ultrabrèves (< 10 ps) jusqu'à des énergies supérieures à 1 µJ voire 10 µJ. Par ailleurs il est souhaitable de pouvoir déplacer librement le faisceau laser sur une distance importante (supérieure à 1m) et avec un angle d'incidence variable sans modifier les propriétés géométriques du point de focalisation. Un faisceau laser se propageant exclusivement en ligne droite dans l'air, il est généralement nécessaire d'utiliser un jeu de miroirs, éventuellement mobiles dans l'espace, afin de diriger le faisceau laser à l'endroit désiré avec l'angle d'incidence souhaité.

Une solution beaucoup plus souple a été trouvée avec l'utilisation de guide d'onde et en particulier de fibre optique. On peut ainsi acheminer le faisceau d'un laser à un endroit quelconque de l'espace et en modifier la direction très facilement. Ce type de guide d'onde est très utilisé dans les télécommunications optiques et dans les lasers de puissance utilisés dans des applications industrielles. Il existe ainsi des lasers à rayonnement continu ou produisant des impulsions longues, c'est à dire d'une durée supérieure à 1 ns, utilisant des fibres optiques afin de déplacer le faisceau laser sur une distance de plusieurs mètres voire dizaines de mètres. Ces systèmes peuvent être intégrés sur des bras de robot ou dans des pièces à main. L'extrémité par laquelle le faisceau est émis peut ainsi se déplacer selon 6 axes.

Lorsque la durée des impulsions devient inférieure à 1 ns ou si la puissance crête dépasse typiquement 300 kW, la propagation sur quelques mètres dans une fibre monomode donne lieu à l'apparition d'effets non-linéaires comme l'effet Raman et/ou l'auto-modulation de phase qui dégradent les propriétés spatiales et/ou temporelles de l'impulsion laser. En pratique, il est à ce jour impossible de propager une impulsion laser d'une durée de 1 ps dans une fibre optique monomode souple et flexible en verre avec une énergie supérieure à quelques centaines de nanojoules et sur une distance supérieure à quelques centimètres.

De la même façon, l'amplification directe des impulsions ultra-brèves, c'est à dire d'une durée inférieure à typiquement 10 ps, se heurte à l'apparition d'effets non linéaires qui empêchent l'utilisation d'amplificateurs optiques d'épaisseur supérieure à quelques millimètres. Afin d'amplifier des impulsions très brèves, on connaît aussi la méthode d'amplification d'impulsions à dérive de fréquence qui consiste à transformer des impulsions initialement très brèves (de durée inférieure à 1ps généralement) en les étirant par un facteur E jusqu'à plusieurs dizaines voire centaines de picosecondes. Leur puissance crête est alors diminuée par un même facteur E permettant leur amplification sans subir les effets non-linéaires délétères. Ces impulsions sont alors recomprimées par un système dispersif, appelé compresseur, généralement composé de deux réseaux de diffraction.

Les systèmes d'amplification d'impulsions à dérive de fréquence imposent l'utilisation de source d'impulsions ultra-brèves, d'un étireur d'impulsion et d'un compresseur très encombrant et très sensible aux vibrations et aux déplacements. Leur intégration dans un système industriel est compliquée et oblige à l'utilisation d'un ensemble de miroirs pour conduire le faisceau jusqu'à la pièce à traiter. Par ailleurs il convient d'ajuster finement les facteurs d'étirement et de compression ce qui impose un étireur et/ou un compresseur ajustable.

Pour pallier cette rigidité d'utilisation, des lasers à fibre ont été développés. Dans ces systèmes, les amplificateurs sont composés de fibres optiques dopées par des ions permettant l'amplification d'une onde lumineuse.

Afin de conserver la qualité du faisceau laser, les fibres utilisées, qu'elles soient passives ou actives, doivent être parfaitement monomodes. Il est aussi connu que malgré les efforts des fabricants de fibres optiques, les fibres optiques actuelles dont le cœur a un diamètre supérieur à typiquement 15 µm ne sont monomodes que si on les garde parfaitement fixes. Ces fibres peuvent être souples et peuvent être lovées selon des figures géométriques variées mais une fois que la position a été choisie afin de produire un faisceau de bonne qualité, tout mouvement de la fibre provoque une modification des propriétés géométriques du faisceau (forme, direction, puissance...). Ces instabilités sont particulièrement sensibles pour des fibres de courte longueur, les modes de propagation d'ordres supérieurs n'ayant pas la possibilité d'être filtrés lors la propagation dans la fibre sur une grande longueur.

Les lasers à fibre souple produisant des faisceaux de bonne qualité sont donc restreints à l'utilisation de fibres de diamètre de cœur inférieur à 15 µm. Cette limitation s'applique aussi bien aux fibres actives amplificatrices qu'aux fibres optiques passives assurant uniquement la propagation du faisceau. On voit donc que la physique ne permet pas la production ou la propagation d'impulsions laser de durée inférieure à 10 ps et de puissance crête supérieure à typiquement 100 kW sur plusieurs mètres dans des guides d'onde souples permettant de conserver la qualité du faisceau tout en déplaçant l'extrémité du guide dans toutes les directions.

Afin de construire une source laser permettant l'acheminement d'impulsions ultra-brèves sur de grandes distances à l'aide de fibres optiques, différentes solutions ont été proposées.

Différents auteurs ont proposé d'utiliser des fibres à cœur creux afin de transporter des impulsions lasers ultra-brèves. Ces fibres à cœur creux évitent effectivement l'ensemble des difficultés liées aux effets non-linéaires lors de la propagation dans un milieu solide mais ne peuvent pas être amplificatrices et ne peuvent pas être soudées sur des fibres classiques en verre.

L'amplification à dérive de fréquence a aussi été utilisée pour éviter les effets non-linéaires dans les fibres actives ou passives, qu'elles soient à saut d'indice ou à structure photonique en étirant temporellement les impulsions avant leur propagation. Afin d'obtenir des impulsions brèves sur la cible finale, il convient de recomprimer ces impulsions et donc d'introduire un compresseur après la fibre. Pour obtenir des énergies importantes il faut cependant utiliser un facteur d'étirement très important (> 500) ce qui implique un compresseur très encombrant. Un tel compresseur est lourd et sensible aux vibrations ou aux chocs. Cette méthode n'est donc pas compatible avec un déplacement souple en 3D du faisceau.

Le document de brevet EP 1 712 936 (Ramachandran et al) propose d'utiliser des fibres multimodes dont le diamètre de cœur est notablement plus grand que celui d'une fibre monomode. Le mode fondamental recherché est converti en un mode d'ordre supérieur avant de l'injecter dans la fibre. Ce système nécessite l'utilisation d'un étireur avant d'injecter l'impulsion dans la fibre et d'un convertisseur de mode pour ramener le faisceau multimode à une forme utilisable proche de celle d'un faisceau monomode. Par ailleurs il est sensible au couplage entre modes et donc aux mouvements de la fibre.

Le document de brevet US 8,948,219 propose une solution utilisant des laser déclenchés passivement associés à un amplificateur optique non-linéaire et un compresseur ajustable.

Le document de brevet US 9 553 421 divulgue un laser basé sur une source picoseconde suivie d'un transformateur d'impulsion, d'un amplificateur à fibre et d'un compresseur. Pour l'homme de l'art que, la source étant totalement fibrée et tous les composants soudés entre eux, le seul réglage restant réside dans le compresseur qui est configuré pour comprimer les impulsions. C'est donc le compresseur qui s'adapte au système pour comprimer les impulsions. Il s'agit ici aussi d'un compresseur classique, ajustable opto-mécaniquement et intrinsèquement sensible aux vibrations ou aux chocs.

Le but de la présente invention est de proposer une méthode pour la production d'impulsions de durée inférieure à 10 picosecondes et de préférence inférieure à 3 picosecondes, de durée accordable et de forte énergie, c'est à dire supérieure à 100 nJ, facilement orientable et déplaçable dans toutes les directions sans altération de la qualité spatiale du faisceau.

### Exposé de l'invention

A cet effet, la présente divulgation propose un système laser à fibre optique selon la revendication 1.

Le système laser est entièrement fibré entre l'injecteur et le compresseur. De plus, toutes les fibres utilisées sont des fibres optiques monomodes ayant un diamètre de cœur inférieur à 25 micromètres, et de préférence inférieur à 15 microns, ou même inférieur à 10 microns. Les fibres sont des fibres optiques à saut d'indice ou à structure de cristaux photoniques comprenant un cœur solide entouré d'une gaine de capillaires creux. Les fibres optiques monomodes peuvent être orientées et courbées avec un rayon de courbure minimum inférieur à 50 cm et supérieur à 5 cm, tout en préservant la qualité du faisceau laser et l'aspect monomode. En particulier le dernier amplificateur à fibre optique est flexible suivant au moins deux axes de rotation transverses à l'axe optique longitudinal à l'extrémité du dernier amplificateur à fibre optique. Plus précisément, l'ensemble formé par le compresseur et l'extrémité du dernier amplificateur à fibre optique active est flexible autour d'au moins deux axes de rotation transverses à l'axe optique longitudinal à l'extrémité du dernier amplificateur optique, avec un rayon de courbure minimum inférieur à 50 cm.

Cette structure de système laser à fibre optique permet de générer une impulsion laser comprimée de durée inférieure à 10 picosecondes ou même 3 picosecondes, de forte énergie et de durée accordable. L'extrémité du dernier amplificateur à fibre optique fixée au compresseur est facilement orientable et déplaçable dans toutes les directions sans altération de la qualité spatiale du faisceau laser à impulsion. En effet, le compresseur est non ajustable (il est préréglé à la fabrication), ce qui permet de conserver un volume réduit, tout en utilisant un compresseur en volume apte à résister à une impulsion de forte énergie. De façon avantageuse, l'impulsion source a une énergie supérieure à 1 nanojoule.

D'autres caractéristiques non limitatives et avantageuses du système laser conforme à l'invention, prises individuellement ou selon toutes les combinaisons techniquement possibles, sont les suivantes :
l'injecteur comporte en outre un sélecteur d'impulsion ou un atténuateur optique ou un modulateur électro-optique ou un modulateur acousto-optique ou toute combinaison de ces éléments et les moyens de réglage en énergie sont adaptés pour ajuster l'énergie de l'impulsion source au moyen du sélecteur d'impulsion, de l'atténuateur optique, du modulateur électro-optique ou du modulateur acousto-optique, respectivement ou de leur combinaison ;
les moyens électroniques de réglage de durée de l'impulsion comprimée comprennent des moyens d'ajustement en énergie du système amplificateur optique ;
le système amplificateur optique comprend au moins une diode de pompe adaptée pour générer un rayonnement de pompe et les moyens d'ajustement en énergie du système amplificateur optique sont adaptés pour ajuster un courant électrique de la diode de pompe de manière à ajuster le rayonnement de pompe injecté dans le système amplificateur optique ;
l'injecteur comprend un oscillateur laser choisi parmi une diode laser déclenchée par le gain, un laser à solide, un laser à fibre à modes verrouillés en phase, un laser à fibre à blocage de mode passif et un laser à semiconducteur ;
le système amplificateur optique est à base de fibre(s) optique(s) à saut d'indice et/ou de fibre(s) optique(s) à structure de cristaux photoniques ayant un cœur solide et une gaine de guidage formée de capillaires disposés en anneau autour du cœur ;
le système amplificateur optique comporte une fibre optique double gaine ;
le système amplificateur comporte une dernière fibre optique monomode passive disposée en amont du dernier amplificateur à fibre optique flexible ;
le dernier amplificateur a une longueur inférieure à un mètre ou à deux mètres ;
le système amplificateur comporte un premier amplificateur à fibre optique flexible disposé en amont du dernier amplificateur et un premier filtre spectral disposé en aval du module de mise en forme spectro-temporel et en amont du premier amplificateur ;
le dernier amplificateur et/ou le premier amplificateur comporte une fibre optique ayant un cœur à base de silice dopé d'ions terre rare choisi parmi les ions suivants : ytterbium, néodyme, erbium- ytterbium, holmium, thulium, ytterbium-thulium ;
le compresseur comporte deux réseaux à pas fixe ou un réseau de Bragg en volume dispersif à pas variable continument ;
le système comprend une gaine mécanique de protection flexible disposée autour du dernier amplificateur et de la fibre passive et attachée mécaniquement au compresseur;
les moyens de réglage en énergie sont adaptés pour ajuster l'énergie de chaque impulsion source individuellement afin de faire varier la durée comprimée de chaque impulsion amplifiée individuellement ;
la durée de l'impulsion comprimée est décroissante en fonction de l'énergie croissante de l'impulsion source dans une gamme de variation de ±40% de l'énergie de l'impulsion source.

L'invention propose également l'utilisation d'un système laser à fibre optique selon l'un des modes de réalisation dans un dispositif de micro-usinage, un dispositif médical, un dispositif de chirurgie ophtalmique ou un dispositif de détatouage cutané.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Brève description des dessins

La description qui va suivre en regard des dessins annexés, donnés à titre d'exemples non limitatifs, fera bien comprendre en quoi consiste l'invention et comment elle peut être réalisée.

Sur les dessins annexés :
Figure 1 représente schématiquement un système laser à fibre optique selon la présente divulgation,
Figure 2A représente schématiquement un injecteur du système laser selon un exemple de réalisation,
Figure 2B représente schématiquement un injecteur selon une variante,
Figure 3 représente schématiquement un système laser à fibre optique selon un premier exemple de réalisation,
Figure 4 représente schématiquement un système laser à fibre optique selon une variante du premier exemple de réalisation,
Figure 5A illustre un exemple calculé de forme spectrale après le module de mise en forme spectro-temporel d'une impulsion de durée initiale 50 ps et de largeur spectrale initiale de 0.07 nm. La largeur spectrale le module de mise en forme est de 0.29 nm ;
Figure 5B montre la forme spectrale calculée de la même impulsion en sortie du dernier amplificateur optique dans un système comprenant un module de mise en forme spectro-temporel. La largeur spectrale initiale est de 0.07 nm et la largeur spectrale après amplification est de 2.43 nm ;
Figure 6 montre respectivement la trace d'autocorrélation calculée correspondant aux conditions utilisées pour la figure 5B (610) , et la trace d'autocorrélation expérimentale (600) enregistrée pour des paramètres d'impulsion initiale et d'architecture d'amplificateur identiques à ceux utilisé pour la figure (610).
Figure 7 est un exemple de variation de durée d'impulsion comprimée en fonction d'une variation d'énergie d'impulsion source,
Figure 8A illustre un exemple de forme spectrale d'une impulsion amplifiée en sortie du dernier amplificateur optique (pour une impulsion initiale de 50 ps de durée et 0.8 nJ d'énergie initiale). La largeur spectrale est de 3.8 nm ;
Figure 8B montre une trace d'autocorrélation de l'impulsion comprimée d'une durée de 0.76 ps formée à partir de l'impulsion amplifiée illustré sur la figure 8A ;
Figure 9 montre un exemple de système laser configuré pour générer un train d'impulsions, la durée de chaque impulsion du train étant modulée indépendamment l'une de l'autre ;
Figure 10 représente schématiquement un système laser à fibre optique dans lequel la plupart des composants à fibre optique sont disposés à l'intérieur d'une gaine mécanique flexible.

Il est à noter que sur ces figures les éléments structurels et/ou fonctionnels communs aux différentes variantes peuvent présenter les mêmes signes de références.

### Description détaillée

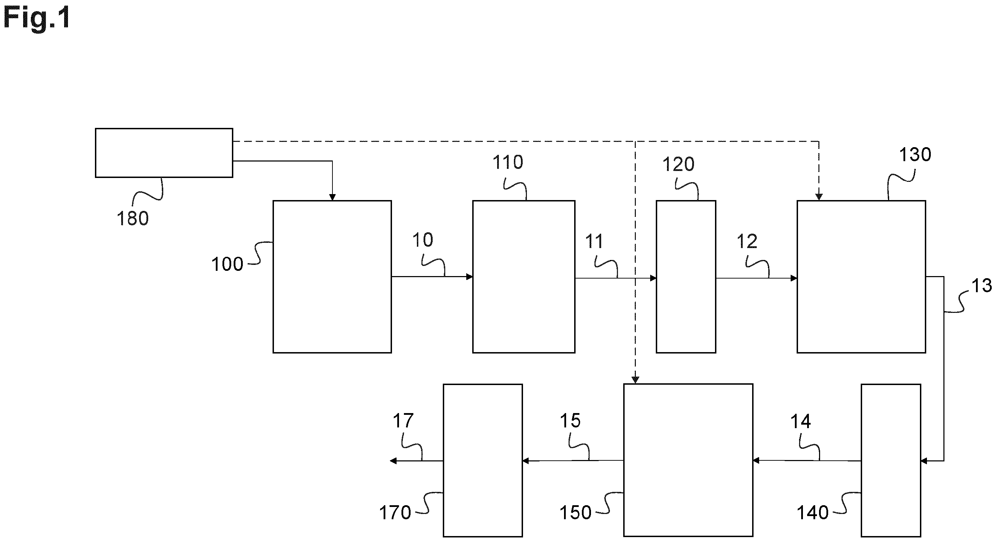

La figure 1 représente schématiquement un système laser à fibre optique conforme à la présente divulgation permettant de générer une impulsion comprimée 17 de durée picoseconde ou femtoseconde, de forte énergie et ajustable en durée.

Nous allons maintenant décrire la structure et le fonctionnement de chacun de ces composants ainsi que les caractéristiques des impulsions se propageant dans un tel système.

Plus précisément, le système laser comprend un injecteur 100, un module de mise en forme spectro-temporel 110, un système d'amplification optique associé à un dispositif de filtrage spectral, un compresseur 170 et des moyens de réglage en énergie 180.

L'injecteur 100 produit une ou plusieurs impulsions source 10. Le module de mise en forme spectro-temporel 110 reçoit une impulsions source 10 et génère une impulsion élargie spectralement 11. Le système d'amplification optique combiné au dispositif de filtrage spectral reçoit une impulsion élargie spectralement 11 et forme une impulsion amplifiée 14. Le compresseur 170 reçoit l'impulsion amplifiée 14 et génère une impulsion comprimée 17.

L'injecteur 100 produit des impulsions source 10 d'une durée comprise entre 30 et 100 ps. L'injecteur 100 comprend par exemple un oscillateur laser.

Les moyens de réglage en énergie 180 permettent d'ajuster l'énergie de l'impulsion source 10 émise par l'injecteur 100. L'énergie de l'impulsion injectée dans le système amplificateur optique étant ajustable, l'énergie de l'impulsion amplifiée s'en trouve indirectement ajustable. Par conséquent, l'injecteur 100 combiné avec les moyens de réglage en énergie 180 permet de générer une impulsion source 10 d'énergie ajustable. L'énergie de l'impulsion source en sortie de l'injecteur est généralement dans une gamme comprise entre 0,1 nJ et 2 nJ. La durée de l'impulsion source est par exemple déterminée par la largeur spectrale du filtre contenu dans la cavité de l'oscillateur laser. Pour un injecteur donné, la durée des impulsions source 10 est donc généralement constante en fonction du temps, d'une impulsion à l'autre. La durée de l'impulsion source, notée d₀, est ici comprise entre 30 ps et 100 ps. Le réglage en énergie d'une impulsion source 10 n'affecte généralement pas sa durée. L'impulsion source 10 est émise dans une bande spectrale B₀ autour d'une longueur d'onde d'émission, par exemple de 1030 nm, la bande spectrale B₀ ayant une largeur comprise entre 0,03 nm et 0,3 nm.

Le module de mise en forme spectro-temporel 110 est disposé entre l'injecteur 100 et le système d'amplification optique. Le module de mise en forme spectro-temporel 110 est constitué d'une fibre monomode passive de longueur comprise entre 100 m et 1000 m. Cette fibre est à conservation de polarisation et possède un cœur dont le diamètre est compris entre 5 et 12 µm. Des exemples de fibres utiles pour cette application sont la PM980 (Nufern, USA ou YOFC, Chine) ou la HI1060 (Corning, USA). Le module de mise en forme spectro-temporel 110 reçoit une impulsion source 10. La propagation de l'impulsion source dans la fibre optique passive induit un effet d'automodulation de la phase de l'impulsion qui dépend de l'intensité lumineuse de l'impulsion source et qui produit un élargissement spectral proportionnel à la puissance crête des impulsions injectées et à la longueur de la fibre. Lors de sa propagation dans la fibre, l'impulsion subit les effets combinés de la dispersion de vitesse de groupe (variation de l'indice avec la longueur d'onde) et de l'auto-modulation de phase (variation de l'indice avec la puissance instantanée). La phase spectrale et temporelle de l'impulsion est alors modifiée et prend une forme qui dépend des paramètres de la fibre et de l'impulsion utilisés. En particulier la dérive de fréquence (fonction dérivée de la phase par rapport à la fréquence) dépend de ces paramètres. De cette manière, le module de mise en forme spectro-temporel 110 remplit une fonction d'adaptateur de phase en amont du système amplificateur optique.

Dans le système illustré sur la figure 1, les moyens de réglage en énergie 180 permettent d'ajuster l'énergie de l'impulsion source émise par l'injecteur 100 et ainsi de faire varier la dérive de fréquence de l'impulsion issue du module de mise en forme spectro-temporel 110. Autrement dit, le module de mise en forme spectro-temporel 110 permet de générer une impulsion élargie spectralement 11, ayant une dérive de fréquence contrôlée en fonction de l'énergie de l'impulsion source. Autrement dit, la largeur de bande spectrale de l'impulsion élargie spectralement 11 est ajustable en fonction de l'énergie de l'impulsion source. L'impulsion élargie spectralement 11 a une largeur de bande spectrale qui s'étend autour de la longueur d'onde source et qui est 5 à 50 fois plus étendue que la largeur spectrale B0 de l'impulsion source. La largeur de bande spectrale de l'impulsion élargie spectralement 11 est supérieure à 0.3 nm. Cette impulsion élargie spectralement 11 est injectée dans le système d'amplification optique et dans le dispositif de filtrage spectral associé.

Le système d'amplification optique est constitué de fibre(s) optique(s) monomode(s). Le système d'amplification optique comprend au moins un dernier amplificateur optique 150. En variante, le système d'amplification optique comprend au moins un premier amplificateur optique 130 et le dernier amplificateur optique 150 disposés en série. Selon d'autres variantes (non illustrées), le système d'amplification optique comporte plus de deux amplificateurs à fibre optique disposés en série pour former des étages d'amplification successifs.

De plus, une section de fibre optique passive, de longueur de la fibre inférieure à 10m, peut être insérée entre deux étages d'amplification. En particulier, une fibre optique passive monomode peut être insérée en amont du dernier amplificateur 150 à fibre optique pour permettre de rallonger la longueur de fibre optique flexible.

Chaque amplificateur à fibre optique est constitué d'une fibre optique active. Selon un mode de réalisation, une fibre optique active est une fibre optique double gaine ayant un cœur dopé d'ions terre rare, par exemple d'ions ytterbium. La structure à double gaine permet un pompage optique par injection du rayonnement d'une ou plusieurs diodes laser dans la première gaine, dite gaine de pompe. Les fibres optiques actives sont préférentiellement à maintien de polarisation. Ces fibres sont bien connues de l'homme du métier et ne sont pas décrites ici. Elles peuvent être à saut d'indice ou à structure de cristaux photonique. Le guidage du rayonnement de pompe peut être obtenu par saut d'indice entre le cœur et une gaine solide entourant le cœur ou par un anneau de capillaires très minces (air clad) entourant le cœur. L'absorption du rayonnement de pompe injecté dans la gaine de pompe est typiquement comprise entre 3 dB/m et 20 dB/m à la longueur d'onde de la pompe.

De manière alternative, les moyens de réglage en énergie 180 permettent en outre d'ajuster directement l'énergie de l'impulsion amplifiée au niveau du système amplificateur optique, par exemple par ajustement du courant d'une diode de pompe pour au moins un amplificateur à fibre optique du système d'amplification. L'amplificateur étant composé d'au moins une fibre optique, l'ajustement de l'énergie de l'impulsion amplifiée induit une variation de la modulation de phase à la traversée de cet amplificateur et de toutes les fibres situées en aval de cet amplificateur et par conséquent une modification de la durée de l'impulsion comprimée.

Un filtre spectral 120, respectivement 140 est disposé en amont de chaque amplificateur optique 130, respectivement 150. Plus précisément, le dernier filtre spectral 140 est disposé en amont du dernier amplificateur optique 150. Dans une variante comprenant plusieurs amplificateurs, un premier filtre spectral 120 est disposé en amont du premier amplificateur optique 130, aussi appelé pré-amplificateur optique. Autrement dit, chaque amplificateur optique est associé à un filtre spectral disposé en amont. Généralement, le filtre spectral est adjacent à l'amplificateur optique auquel il est associé. Un filtre spectral est composé par exemple d'une lame de verre supportant un traitement multi-diélectrique dont la transmission est maximale autour de la longueur d'onde de l'impulsion source et très faible en dehors de cette zone. Ce filtre est avantageusement placé dans un composant comprenant une entrée pour une fibre suivi d'une lentille de collimation en espace libre, suivie elle-même du filtre en espace libre suivi d'une seconde lentille de refocalisation dans une fibre de sortie. On peut aussi utiliser un réseau de Bragg fibré ou éventuellement un réseau de Bragg massif placé dans un composant en espace libre. Le dernier filtre spectral 140, respectivement le premier filtre spectral 120, est généralement un filtre passe bande. Plus précisément, le filtre spectral 120, respectivement 140, est choisi pour transmettre une bande spectrale d'environ 50 nm et inférieure à 100 nm, centrée sur la longueur d'onde de l'impulsion source, par exemple de 1030 nm, tout en atténuant fortement la génération d'un signal Raman parasite dans chaque amplificateur optique 130, respectivement 150. Cette bande spectrale peut être volontairement réduite à 8 nm voire 4 nm autour de la longueur d'onde centrale de l'impulsion source.

Le filtre spectral 120 reçoit une impulsion élargie spectralement 11 à dérive de fréquence ajustable en fonction de l'énergie de l'impulsion source et transmet une impulsion filtrée 12 spectralement au premier amplificateur optique 130. Le premier amplificateur optique 130 amplifie l'impulsion filtrée 12 et génère une impulsion pré-amplifiée 13. Le filtre spectral 140 reçoit l'impulsion pré-amplifiée 13 et transmet une impulsion filtrée 14 spectralement au dernier amplificateur optique 150. Le dernier amplificateur optique 150 amplifie l'impulsion filtrée 14 et génère une impulsion amplifiée 15.

Le filtre spectral 120, respectivement 140, permet ainsi de limiter un transfert de puissance vers une raie Raman susceptible d'apparaître dans la fibre optique du module de mise en forme spectro-temporel ou dans les amplificateurs à fibre optique 130, 150, par effet Raman stimulé, cette raie Raman étant susceptible de croître au fur et à mesure de sa propagation et de l'amplification. De cette manière, le rayonnement Raman est fortement atténué voire éliminé après chaque étage afin d'éviter la croissance progressive du rayonnement Raman, tout en accumulant lors des différents étages de propagation ou d'amplification un élargissement spectral par auto-modulation de phase.

Le filtre spectral 120, respectivement 140, permet d'accumuler l'automodulation de phase en éliminant à chaque passage d'un filtre la puissance de la raie Raman. La compétition entre auto-modulation de phase et génération d'une raie Raman étant éliminée, il est ainsi possible d'atteindre un élargissement spectral de l'impulsion amplifiée 15 par auto-modulation de phase par un facteur supérieur à 50 voire à 100 par rapport à la largeur spectrale de la source 100 sans être limité par la croissance de l'effet Raman.

Les effets optiques non-linéaires dont l'automodulation de phase et l'effet Raman sont proportionnels au produit de la longueur traversée par l'intensité lumineuse locale. Ces effets optiques non-linéaires sont donc particulièrement importants dans la partie finale du système amplificateur dans laquelle l'énergie des impulsions est maximale. La puissance produite par le ou les amplificateurs est susceptible d'être limitée par l'apparition de rayonnement Raman. Selon la présente divulgation, on limite, d'une part, la longueur de la fibre active du dernier amplificateur 150, et, d'autre part, on supprime toute fibre optique passive après le dernier amplificateur 150. Cette disposition permet de limiter la longueur de fibre traversée par l'impulsion amplifiée. Le déport flexible ne peut pas se faire en utilisant un amplificateur logé dans le boitier principal du laser suivi d'un tronçon de fibre passive qui assurerait le transport flexible des impulsions. Dans ce cas l'effet Raman induit par une impulsion d'énergie maximale sur des longueurs de l'ordre de 2 à 3m serait inacceptable. Dans un exemple de réalisation, le dernier tronçon de fibre comprend une section de fibre optique passive suivie du dernier amplificateur optique 150 constitué d'une section de fibre active. La fibre passive et la fibre active ont des diamètres de cœur proches voire identiques, par exemple deux fibres de 10 µm de diamètre de cœur ou une fibre passive de 10 µm et une fibre active de 12µm ou une fibre de passive de 10 µm et une fibre active de 14 µm et sont toutes les deux à structure double gaine. La fibre active du dernier amplificateur optique 150 possède un diamètre de cœur compris entre 9 µm et 20 µm, et de façon avantageuse entre 10 µm et 15 µm. La fibre active du dernier amplificateur optique 150 a une longueur inférieure à 2m et préférentiellement inférieure à 1m. Dans un mode de réalisation, par exemple pour un dernier amplificateur optique 150 ayant une longueur de 1 m, la fibre passive a une longueur d'environ 3 m. La fibre active du dernier amplificateur optique 150 a un cœur dopé par des ions ytterbium.

La fibre passive du dernier tronçon en amont du dernier amplificateur optique 150 permet d'augmenter le volume d'interaction laser-matière dans lequel l'extrémité distale du dernier amplificateur optique 150 peut être déplacée, sans modifier les propriétés de l'impulsion laser amplifiée.

En sortie du dernier amplificateur optique 150, l'impulsion amplifiée 15 a une énergie supérieure ou égale à environ 1 microjoule (µJ). De plus, cette énergie est ajustable en fonction de l'énergie de l'impulsion source. De façon complémentaire, l'énergie de l'impulsion amplifiée 15 est en outre ajustable, par exemple lorsque les moyens de réglage en énergie 180 permettent d'ajuster le courant de pompe d'au moins un amplificateur optique.

Le compresseur 170 est disposé en aval du système d'amplification optique. Plus précisément, le compresseur est attaché à l'extrémité distale du dernier amplificateur 150 à fibre optique. A titre d'exemple, la fibre active du dernier amplificateur peut être équipé d'un connecteur de type FC-APC ou équivalent qui est connecté à la pièce mécanique supportant le compresseur, ou être fixée dans un collimateur qui permet de produire un faisceau collimaté, ledit collimateur étant attaché au support de compresseur.

Le compresseur 170 est massif et non ajustable. Autrement dit, le déphasage spectral introduit par le compresseur est fixe. Le compresseur 170 ayant une dispersion prédéterminée d'environ 5 à 30 ps/nm, il ne comporte pas de moyens de réglage et présente un encombrement réduit. Dans un mode particulier, le compresseur a pour dimensions typiques 5 mm x 5 mm x 7 mm et est inclus dans un module mécanique qui a par exemple un volume de 2 cmx2cmx2cm de côtés. Le compresseur 170 permet une compression d'un facteur typiquement 20 à 50 pour une impulsion initiale de 50 ps. Le compresseur n'étant pas ajustable, il est stable vis-à-vis des perturbations extérieures, par exemple des vibrations. Dans un exemple de réalisation, le compresseur 170 est composé d'un ensemble fixe de deux réseaux de diffraction en série sur le trajet optique selon le schéma de compression classique. Selon une variante particulièrement avantageuse, le compresseur 170 est composé d'un réseau de Bragg massif à pas variable (ou CVBG selon la terminologie anglo-saxonne pour Chirped Volume Bragg Grating, produit par exemple par la société OPTIGRATE, Floride, USA). Plus précisément, un réseau de Bragg à pas variable présente une dérive du pas de diffraction le long de son axe de propagation. Un réseau de Bragg à pas variable est connu pour pouvoir produire un déphasage spectral très proche d'une parabole et donc une dérive de fréquence quasi-linéaire.

Le compresseur 170 reçoit l'impulsion amplifiée 15 en sortie du dernier amplificateur 150 et forme une impulsion comprimée 17 de forte énergie. L'énergie, respectivement la puissance crête de l'impulsion comprimée 17 est de l'ordre de 1 µJ à 30 µJ, respectivement 500 kW à 30 MW. La durée de l'impulsion comprimée 17 est inférieure à 10 ps, ou même inférieure à 3 ps, voire inférieure à 1 ps, c'est-à-dire dans le domaine femtoseconde. Plus précisément, la durée de l'impulsion comprimée 17 est ajustable en fonction de l'énergie de l'impulsion source.

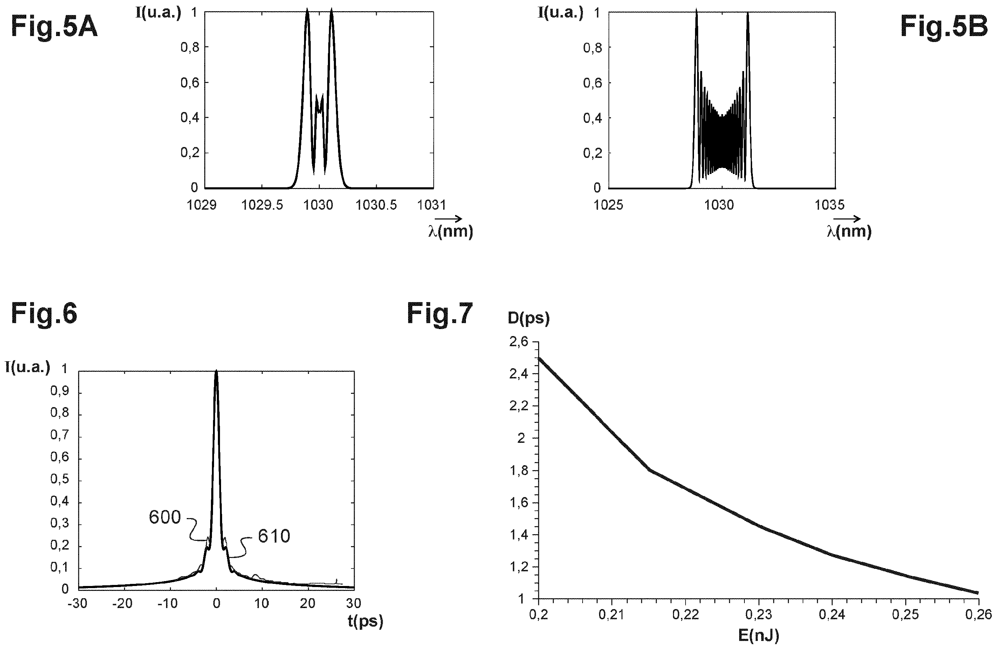

L'ajustement en durée de l'impulsion comprimée 17 relève une importance cruciale dans certaines applications, par exemple en chirurgie oculaire, notamment en chirurgie de la cataracte. Ici, une augmentation de l'ordre de 20% à 25% de l'énergie de l'impulsion source permet de faire varier la durée de l'impulsion comprimée de 2 ps à 1 ps (voir Figure 6), sans aucun autre ajustement du système laser (pas d'ajustement en phase ou en dispersion du compresseur notamment). Or, une diminution de la durée d'impulsion d'un facteur 2 correspond à une augmentation de puissance crête d'un facteur 2. Le contrôle de l'énergie de l'impulsion source et donc de l'impulsion amplifiée permet de contrôler très finement la puissance crête délivrée en sortie du compresseur. Ce contrôle est ici opéré entièrement et uniquement via un système électronique de contrôle et ne nécessite aucun réglage optique ou opto-mécanique. Par conséquent, selon la présente divulgation, le réglage de durée d'impulsion peut être effectué plus rapidement qu'avec un système mécanique ou opto-mécanique. Ceci permet d'ajuster la durée de chaque impulsion individuellement et donc d'optimiser l'interaction laser matière par exemple.

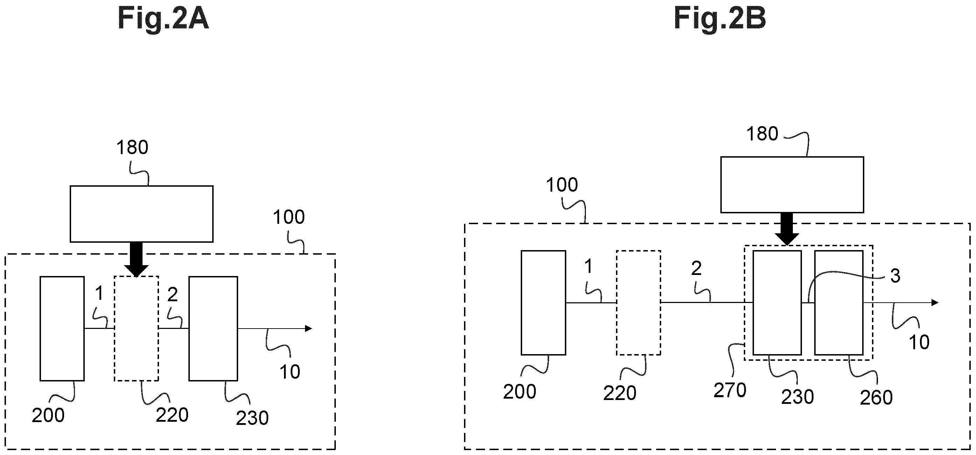

La figure 2A représente un premier exemple de réalisation d'un injecteur dans un système laser selon la présente divulgation. L'injecteur 100 comporte ici un oscillateur laser 200, un pré-amplificateur optique de source 220 et un sélecteur d'impulsion 230. L'oscillateur laser 200 génère au moins une impulsion initiale 1 de durée d₀ et de bande spectrale B₀. Le pré-amplificateur optique de source 220 permet d'augmenter l'intensité/l'énergie de l'impulsion initiale 1 et de générer une impulsion initiale préamplifiée 2, sans modifier sa durée ni sa bande spectrale. Plus précisément, les moyens de réglage en énergie 180 permettent d'ajuster l'intensité/l'énergie de l'impulsion initiale préamplifiée 2. Le sélecteur d'impulsion 230 permet de modifier la cadence de la source laser et de sélectionner une ou plusieurs impulsions source 10 aussi appelée impulsion d'entrée parmi les impulsions initiales préamplifiées 2. Dans un exemple, l'oscillateur laser 200 génère des impulsions initiales 1 à une cadence comprise généralement entre 1 MHz et 100 MHz. Le sélecteur d'impulsion 230 permet de réduire la cadence des impulsions source 10 ou de sélectionner une impulsion source 10 à la demande. Le sélecteur d'impulsion est par exemple un modulateur acousto-optique ou un modulateur électro-optique. Outre son rôle d'ajustement de la cadence de la source, il permet éventuellement de moduler l'énergie des impulsions 10.

Ainsi, en ajustant l'énergie de l'impulsion source 1 à l'aide des moyens de réglage en énergie 180, il est possible d'ajuster la durée de l'impulsion comprimée 17. On observe l'évolution de la durée de l'impulsion comprimée 17 en sortie du compresseur 170 sur la figure 7.

Dans le cas où l'injecteur 100 comporte un préamplificateur optique de source 220 et un sélecteur d'impulsions 230, le préamplificateur optique de source 220 peut être disposé soit en amont soit en aval du sélecteur d'impulsions 230.

Si l'énergie de l'impulsion initiale 1 issue de l'oscillateur est inférieure à environ 100 pJ, cette impulsion source 1 est injectée dans le préamplificateur optique de source 220 afin d'amener l'énergie de l'impulsion initiale préamplifiée 2 à une valeur supérieure à 100 pJ et préférentiellement à une valeur supérieure à 1000 pJ ou 1 nJ. Le gain du préamplificateur optique de source 220 est réglable électroniquement à l'aide des moyens de réglage en énergie 180, ce qui permet d'ajuster l'énergie de l'impulsion source 10 en sortie de l'injecteur 100. Le préamplificateur optique de source 220 prend la forme d'une fibre dopée pompée par une ou plusieurs diodes laser. Des exemples de matériaux dopant pour fibres optiques actives incluent les ions ytterbium (Yb),néodyme (Nd), erbium (Er), co-dopage erbium-ytterbium (Er/Yb), holmium (Ho), thulium (Tm), co-dopage Yb,Tm sans être limité à cette liste. Le préamplificateur optique de source 220 est pompé par une ou plusieurs diodes laser. L'ajustement du gain du pré-amplificateur optique de source peut ainsi se faire par ajustement des paramètres de la ou des diode(s) de pompe, comme par exemple leur courant d'alimentation.

La cadence de l'oscillateur 200 est typiquement de 10 à 100 MHz mais peut être inférieure à 10 MHz voire inférieure à 1MHz sans pour autant être inférieure à la cadence finale de production des impulsions comprimées 17. Si la cadence de l'oscillateur 200 ne correspond pas à celle souhaitée pour les impulsions comprimées 17 en sortie du système, l'impulsion initiale 1 ou, respectivement l'impulsion initiale préamplifiée 2 est injectée dans un sélecteur d'impulsion 230 qui réduit la cadence et sélectionne les impulsions source 10 destinées à être amplifiées. Ce sélecteur d'impulsion 230 est par exemple un modulateur acousto-optique dont les entrées et sorties sont fibrées. Il peut aussi prendre la forme d'un modulateur électro-optique ou de tout autre élément assez rapide pour sélectionner les impulsions. Le sélecteur d'impulsion 230 est optionnel si l'oscillateur 200 fonctionne directement à la cadence voulue en sortie du système. C'est habituellement le cas pour un oscillateur à diode laser déclenchée ou modulée.

Dans un autre mode de réalisation, illustré sur la figure 2B, l'injecteur comporte un oscillateur laser 200, un pré-amplificateur optique de source 220, un sélecteur d'impulsion 230 et un atténuateur optique 260. L'énergie des impulsions source 10 est ajustée finement grâce à composant qui peut prendre la forme d'un atténuateur ou d'un modulateur pilotable. L'atténuateur optique 260 peut être un élément séparé ou être inclus dans un même modulateur optique 270 que le sélecteur d'impulsion 230. Un modulateur acousto-optique permet par exemple de sélectionner les impulsions une à une et dans le même temps d'ajuster l'énergie de ces impulsions à la sortie du modulateur. De cette manière, un train d'impulsions initiales d'énergie de l'ordre de 1 nJ à une cadence de 20 MHz peut être transformé en un train d'impulsions source 10 à une cadence par exemple de 250 kHz et d'énergie ajustable entre 0.01 nJ et 0.5 nJ. La cadence des impulsions source 10 peut aussi être choisie indépendamment parmi les sous-multiples de 20 MHz. L'avantage d'un modulateur rapide comme un modulateur acousto-optique ou électro-optique est qu'il permet de moduler l'énergie des impulsions source 10 une par une et de produire des trains d'impulsions d'énergie ajustable pour chaque impulsion source 10.

L'injecteur 100 est piloté par une unité de contrôle 180 qui permet de moduler l'énergie de chaque impulsion source 10 indépendamment. On module l'énergie de la source 10 ce qui va avoir pour effet de modifier légèrement l'énergie des impulsions amplifiées 15 et comprimées 17 mais surtout de modifier leur durée comprimée. L'injecteur 100 est alors capable de produire un train d'impulsions source 10 à une la cadence maximale qui est la cadence, notée F0, de l'oscillateur laser 200 mais qui peut être toute cadence sous-multiple (F0/n) de cette cadence initiale, n étant un nombre entier, chaque impulsion source 10 ayant une énergie ajustable. L'injecteur 100 peut aussi produire des paquets de N impulsions source 10 à la cadence F0 ou à une cadence inférieure F0/n, ces paquets étant générés de façon périodique ou non-périodique. De façon générale, l'injecteur 100 produit un train d'impulsions source 10 à la cadence désirée par l'utilisateur et dont l'énergie est ajustable.

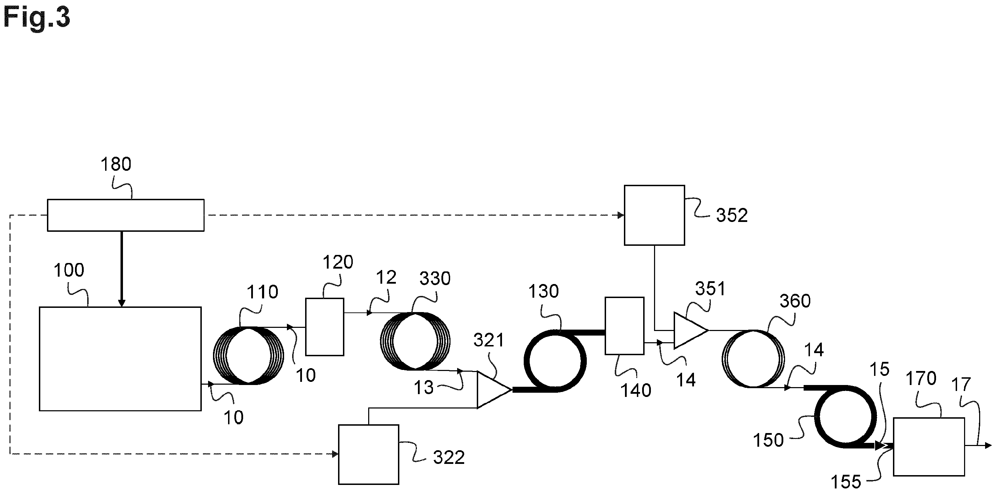

La figure 3 représente schématiquement un système laser à fibre optique selon un premier exemple de réalisation. Ce système laser à fibre optique comporte un injecteur 100 tel que décrit en lien avec la figure 2A ou 2B, un module de mise en forme spectro-temporel 110 à fibre optique, une série d'amplificateurs optiques 130, 150 à fibre dopée et un compresseur 170. Ce système laser à fibre optique permet la production d'impulsions 17 ultra-brèves de forte énergie. La série d'amplificateurs optiques 130, 150 à fibre dopée permet d'augmenter l'énergie des impulsions par un facteur 1000, voire 10 000 ou 100 000 ou 1 000 000 ou plus. Des exemples de matériaux dopants pour fibres optiques incluent les ions Yb, Nd, Er, Er/Yb, Ho, Tm, Yb/Tm sans être limité à cette liste. Le compresseur 170 permet de comprimer la durée des impulsions amplifiées 15 par un facteur supérieur à 10.

Afin de réduire la durée des impulsions comprimées 17 en sortie du système laser à fibre optique, la présente divulgation utilise l'automodulation de phase et un module de mise en forme spectro-temporel 110. Le phénomène d'automodulation de phase créée un élargissement spectral accompagné d'une modulation de la phase. Pour obtenir une compression maximale de l'impulsion amplifiée, il est nécessaire que la dérive de fréquence associée à la modulation de phase créée dans l'ensemble des éléments situés entre l'injecteur 100 et le compresseur 170, y compris les amplificateurs optiques 130, 150, corresponde précisément à la dérive de fréquence induite dans le compresseur 170 au signe près. La dérive positive due à l'automodulation de phase est compensée par une dérive négative induite par le compresseur. Pour résoudre ce problème, la présente divulgation utilise un module de mise en forme spectro-temporel 110 qui permet d'ajuster la dérive de fréquence de l'impulsion amplifiée 15 à l'entrée du compresseur 170. Le module de mise en forme spectro-temporel 110 est composé d'une fibre optique monomode passive à conservation de polarisation dont la longueur en mètres est comprise entre 6 et 12 fois la durée en picosecondes de l'impulsion source 10 incidente sur cette fibre. Comme décrit en lien avec les figures 2A et 2B, l'énergie de l'impulsion source 10 injectée dans la fibre 110 est ajustée grâce aux moyens de réglage en énergie 180. Le diamètre du cœur de cette fibre 110 est compris entre 5 et 10 µm et généralement entre 5 et 7 µm. Le spectre de l'impulsion élargie 12 spectralement en sortie de cette fibre 110 est élargi par un facteur compris entre 5 et 30. Un facteur d'élargissement spectral supérieur à 30 est nuisible car susceptible d'induire l'apparition de diffusion Raman stimulée qui va déformer l'impulsion.

Le profil de l'impulsion élargie 12 spectralement n'est que peu modifié dans cette propagation. Sa durée reste inférieure à 1.5 fois la durée de l'impulsion source 10 et le facteur de qualité parabolique introduit par Pierrot est supérieur 0.13. L'impulsion élargie 12 spectralement n'est donc pas considérée comme quasi-parabolique. Néanmoins on peut montrer en utilisant un code de simulation de la propagation dans les fibres que lorsque ce module de mise en forme spectro-temporel 110 est suivi d'un amplificateur optique non-linéaire dans lequel le spectre de l'impulsion va de nouveau être élargi par un facteur 3 à 20, la dérive de fréquence finale après amplification est linéaire sur une partie importante de l'impulsion amplifiée 15, ce qui améliore notablement la qualité des impulsions comprimées 17.

Le faisceau d'impulsion élargie 12 spectralement issu du module de mise en forme spectro-temporel 110 est couplé dans un ou plusieurs composants qui assurent une isolation entre les étages d'amplification et un filtrage spectral des longueurs d'ondes en dehors d'une bande spectrale proche de celle de la source 100. En particulier les filtres 120, 140 ont une très faible transmission à la longueur d'onde de la fréquence Raman produite par le rayonnement issu de la source 100. Cette valeur est facilement calculable à partir des paramètres connus comme le décalage Raman de la silice fondue (450 cm⁻¹). Par exemple pour un oscillateur laser émettant à une longueur d'onde de 1030 nm, le filtre 120, 140 est choisi pour avoir une transmission élevée autour de 1030 nm, par exemple entre 1025nm et 1035 nm et très faible autour de 1080 nm. Un exemple de filtre est un filtre par transmission ayant une transmission supérieure à 90% sur la bande 1026 - 1034 nm et une transmission inférieure à 1% sur la bande 1050 nm- 1150 nm.

Après passage dans un premier filtre spectral 120 et un isolateur optique (non représenté), l'impulsion élargie spectralement 12 se propage dans une fibre passive 330 qui permet de guider l'impulsion jusqu'à l'entrée du premier amplificateur 130 à fibre active. Dans un mode particulier d'utilisation, le filtre spectral 120 et l'isolateur optique sont inclut dans un même composant fibré qui apporte à la fois les fonctions de filtrage et d'isolation. La fibre passive 330 et la fibre active 130 ont un diamètre identique ou très proche et typiquement compris entre 5 et 11 µm. La fibre active du premier amplificateur 130 a une longueur comprise entre 1 m et 5 m et préférentiellement entre 1 m et 2 m. La fibre active du premier amplificateur 130 est pompée par une ou plusieurs diodes laser 322. Le rayonnement de pompe est injecté dans la gaine de pompe de la fibre active du premier amplificateur 130 par exemple à l'aide d'un combineur de pompe 321. Le gain du premier amplificateur 130 est typiquement de 10 à 1000, et avantageusement compris entre 10 et 100.

Un second ensemble comportant un isolateur optique et un dernier filtre spectral 140 est disposé en sortie du premier amplificateur 130. Le dernier filtre spectral 140 fonctionne sur le même principe que le premier filtre spectral 120. L'impulsion élargie 14 spectralement issue de cet ensemble isolateur optique et dernier filtre spectral 140 est transmise à une fibre optique passive 360 à travers un autre combineur de pompe 351. Le combineur de pompe 351 permet d'injecter dans la fibre passive 360 le rayonnement de pompe d'une ou plusieurs diodes de pompe 352. La fibre passive 360 est par exemple une fibre passive double gaine à conservation de polarisation dont les diamètres du cœur et de la gaine sont sensiblement identiques à ceux de la fibre active du dernier amplificateur 150 à laquelle elle est soudée.

La longueur de la fibre passive 360 est comprise entre 1 et 10m et préférentiellement entre 1 et 3m afin de limiter les effets non-linéaires dans cette fibre. La fibre passive 360 a un cœur ayant un diamètre de cœur d'environ 10 à 20 µm. La fibre active du dernier amplificateur 150 est une fibre double gaine dont le cœur est dopé par des ions terre rare. Dans notre exemple, la fibre active du dernier amplificateur 150 est une fibre dopée ytterbium dont le diamètre cœur est de 12.5 µm. L'absorption de la fibre pour une pompe injectée dans la gaine de diamètre typiquement 105 µm est de l'ordre de 8 dB/m à 976 nm. Le gain de cette fibre active 150 est compris entre 100 et 3000 et préférentiellement entre 300 et 1000. L'énergie d'une impulsion amplifiée 15 issue du dernier amplificateur 150 dépasse 1 µJ et préférentiellement se situe entre 10 µJ et 40 µJ. L'énergie par impulsion est limitée par l'apparition de rayonnement Raman lié aux très forts effets optiques non-linéaires dans le dernier amplificateur 150. Afin de limiter ces effets, il convient de limiter le plus possible la longueur de la fibre active du dernier amplificateur optique 150. Une longueur de 0.7 m est un bon exemple d'optimisation. L'ensemble constitué de la fibre passive 360 et de la fibre active 150 est avantageusement protégé par une gaine métallique ou plastique souple qui recouvre en particulier la soudure entre les fibres 360 et 150. Cette gaine est souple et permet de positionner l'extrémité de la fibre active du dernier amplificateur 150 dans toutes les directions et toutes les positions sur un volume d'au moins 2 m de diamètre.

Le rayonnement de l'impulsion amplifiée 15 issue du dernier amplificateur 150 à fibre active est incident sur le compresseur 170 dont la dérive de fréquence est fixe et non ajustable. Un exemple de compresseur de ce type est vendu par OPTIGRATE (Oviedo, USA) sous la référence CBG-1030-XX. La dispersion de ce compresseur est typiquement comprise entre 7 et 50 ps/nm et préférentiellement inférieure à 30 ps/nm. Le compresseur 170 est adapté pour supporter la transmission d'impulsion comprimées 17 de durée inférieure à 3 ps avec des énergies supérieures à 1 µJ. Ces paramètres de fonctionnement sont incompatibles avec un compresseur à réseau de Bragg dispersif fibré. Le compresseur 170 est attaché fixement à la fibre active du dernier amplificateur 150. Le compresseur 170 a des dimensions compatibles avec le mouvement aisé de l'extrémité de la fibre à laquelle il est attaché dans toutes les directions et positions. Par exemple son encombrement est inférieur à 50x50x50 mm et dans notre exemple inférieur à 25 x 25 x 25 mm. Le diamètre de faisceau dans le compresseur 170 est choisi pour permettre une propagation sans dommage dans les composants du système de l'application visée qui va héberger la source laser, soit par exemple 3 mm. Un diamètre inférieur ou supérieur est bien sur possible sans altérer les performances de la présente invention.

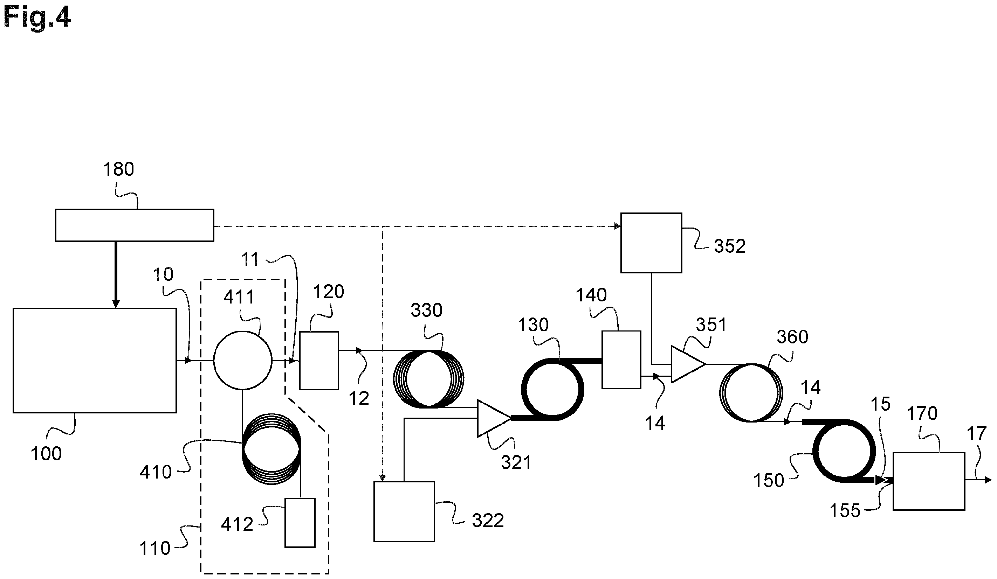

La figure 4 illustre une variante intéressante du système laser à fibre optique de la figure 3. Selon cette variante, le module de mise en forme spectro-temporel 110 est utilisé en réflexion. La sortie de l'injecteur 100 est couplée dans un circulateur optique 411 bien connu de l'homme du métier. Le circulateur optique 411 dirige l'impulsion source 10 vers une fibre optique passive 410 de longueur deux fois moindre que la fibre passive du module de mise en forme spectro-temporel 110 décrit en lien avec la figure 3. En pratique, la fibre optique passive 410 est une fibre monomode à conservation de polarisation, dont la longueur en mètres est comprise entre 3 et 5 fois la durée de l'impulsion incidente sur cette fibre en picosecondes. Un miroir de Bragg fibré 412 d'une largeur spectrale comprise entre 0.1 et 3 nm centré à la longueur d'onde de l'impulsion source est soudé au bout de cette fibre optique passive 410. Le miroir de Bragg fibré 412 renvoie l'impulsion laser pour un second passage dans la fibre optique passive 410 et élimine aussi tout rayonnement en dehors d'une bande spectrale de quelques nanomètres de large, centrée sur la longueur d'onde laser. Le miroir de Bragg fibré 412 supprime en particulier le rayonnement Raman issu de la propagation dans la fibre 410 avant réflexion sur ce miroir de Bragg. Par contre il réfléchit l'impulsion élargie spectralement par l'auto-modulation de phase subie lors de la propagation dans la fibre 410 avant réflexion sur ce miroir de Bragg sans diminuer la largeur spectrale de l'impulsion. Cette variante permet d'accumuler des effets recherchés d'élargissement spectral par auto-modulation de phase sans subir les effets délétères associés comme l'effet Raman. Par ailleurs il permet de diminuer par deux la longueur de la fibre optique 410 utilisée. Le reste de la chaine d'amplification et de compression est similaire à celui décrit en lien avec la figure 3.

Un exemple d'utilisation d'un système laser à fibre optique tel que décrit en lien avec les figures présenté sur les figures 1 à 4 est détaillé ci-après.

L'oscillateur laser 200 génère des impulsions initiales 1 ayant une durée de 50 ps à la cadence de 20 MHz. Un pré-amplificateur optique de source 220 à gain fixe amplifie l'énergie des impulsions préamplifiées jusqu'à 2 nJ. Un modulateur acousto-optique fibré 270 est utilisé pour réduire la cadence à 250 kHz et ajuster l'énergie des impulsions source 10 dans une fenêtre comprise entre 0.2 nJ et 0.8 nJ.

Les impulsions source 10 sont injectées dans un module de mise en forme spectro-temporel 110 constitué d'une fibre monomode de 400 m de longueur puis dans un système amplificateur optique (comme illustré sur la figure 3). La longueur totale de fibre optique du système amplificateur optique est de 10 m dont 2m de fibres actives. Les impulsions sont amplifiées jusqu'à une énergie de 16 µJ en sortie du système amplificateur optique puis recomprimées dans le compresseur 170 à réseau de Bragg volumique dispersif.

La figure 5A représente un exemple de spectre d'une impulsion élargie spectralement 11 en sortie de module 110 de mise en forme spectro-temporelle. Le spectre est ici calculé par un code de simulation en utilisant les données d'entrée de l'expérience, en particulier pour une énergie d'entrée dans le module de 0,2 nJ. La largeur spectrale en sortie de module 110 est de 0,29 nm. La figure 5B représente le spectre calculé de l'impulsion comprimée 17 en sortie du compresseur 170. On retrouve sur cette image les modulations typiques d'un élargissement spectral par auto-modulation de phase. La largeur spectrale est alors de 2,43 nm. La figure 6 montre la fonction d'autocorrélation de l'impulsion comprimée mesurée en sortie de système (courbe 600) et respectivement de l'impulsion élargie spectralement calculée avec notre code (courbe 610). La durée des impulsions est de 1,2 ps.

La compression optimale exprimée comme donnant l'impulsion comprimée 17 de durée la plus courte est obtenue en réglant l'efficacité de diffraction du modulateur acousto-optique 270 d'un injecteur 100 tel que décrit en lien avec la figure 2B, ce qui permet d'ajuster l'énergie de l'impulsion source 10 injectée dans le module de mise en forme spectro-temporel 110.

On peut aussi accorder la durée des impulsions comprimées 17 en modifiant l'efficacité de diffraction du modulateur acousto-optique 270, ce qui permet d'ajuster l'énergie de l'impulsion source 10 injectée dans le module de mise en forme spectro-temporel 110.

La figure 7 représente un exemple calculé de durée D d'impulsion comprimée 17 en fonction de l'énergie de l'impulsion source 10 injectée dans le module de mise en forme spectro-temporel 110. L'ajustement en énergie de l'impulsion source 10 entre 0.2 nJ et 0.25 nJ soit 25% de variation permet d'ajuster précisément la durée de l'impulsion comprimée entre environ 2.5 ps et 1 ps (plus de 150% de variation).

On observe que l'ajustement en énergie de l'impulsion source 10 peut être obtenu de manière équivalente en modifiant le gain du pré-amplificateur optique de source 220 dans un injecteur 100 tel que décrit en lien avec la figure 2A.

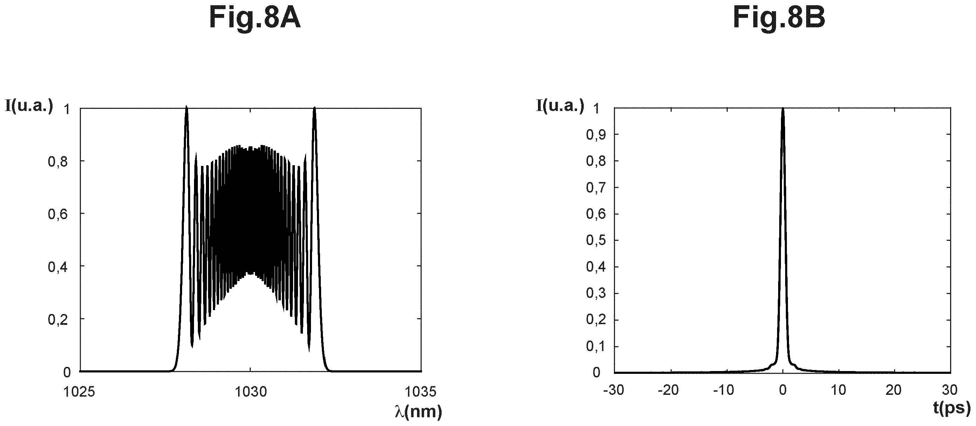

Dans un exemple de réalisation, l'énergie de l'impulsion source 10 injectée dans le module de mise en forme spectro-temporel 110 est augmenté jusqu'à 0.8 nJ, produisant, en sortie de ce module, un spectre de largeur égale à 0.87 nm. Le gain du pré-amplificateur optique de source 220 est réduit pour conserver la même énergie incidente sur le dernier amplificateur optique 150 et le gain de ce dernier amplificateur optique 150 est ajusté pour optimiser la compression. Les figures 8A-8B montrent le spectre (fig.8A) et la fonction d'autocorrélation (fig.8B) de l'impulsion comprimée 17. Le spectre de la fig. 8A est fortement élargi (largeur de bande ~3.8 nm) et présente une forme différente de celle de la figure 5B. Il reste fortement modulé mais les pics de fréquences extrêmes de la Fig.5B sont fortement réduits au profit des fréquences centrales qui correspondent à ces zones ou la dérive de fréquence est linéaire donc facilement compensable par le compresseur. La fonction d'autocorrélation correspond à une durée d'impulsion notablement plus courte d'environ 0,76 ps, avec un piédestal extrêmement réduit par comparaison avec les figures 5A et respectivement 5B. On observe ici aussi que le choix des paramètres d'utilisation du module de mise en forme spectro-temporel 110 influe sur la qualité et la forme de l'impulsion comprimée 17. L'ajustement de l'énergie de l'impulsion source 10 en entrée du module de mise en forme spectro-temporel permet bien d'ajuster très précisément la durée de l'impulsion comprimée 17.

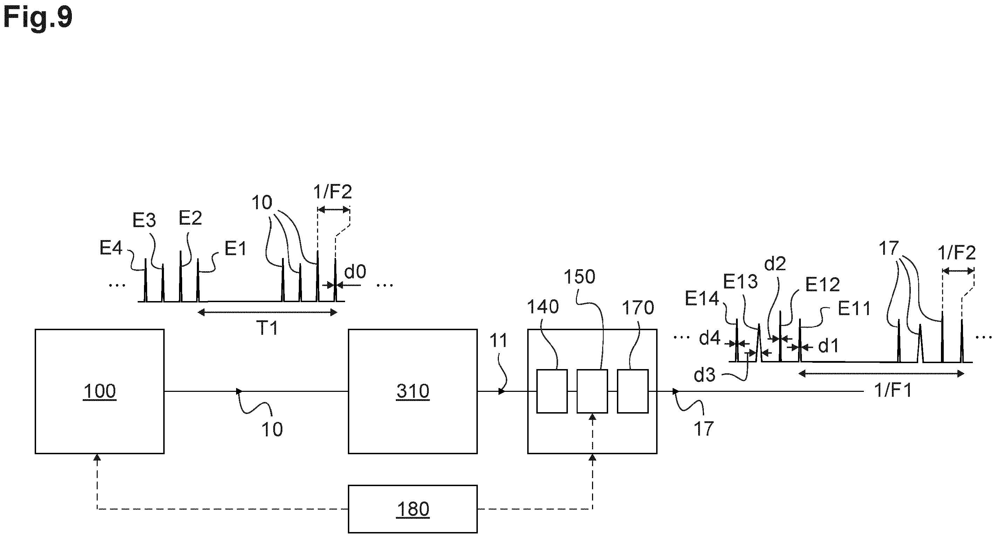

Dans un mode particulier de réalisation présenté sur la figure 9, l'injecteur 100 produit un train de paquets d'impulsions source d'amplitude ou d'énergie variable E1, E2, E3, E4, l'énergie de chaque impulsion source 10 étant choisie par l'utilisateur. En sortie de l'injecteur 10, le faisceau source consiste par exemple, et sans que ce soit limité à cet exemple, en un train périodique à la cadence F1 de paquet d'impulsions à la cadence F2, chaque impulsion d'un paquet ayant un énergie variable E1, E2, E3, E4 et pas nécessairement constante. Ce train d'impulsions modulées en énergie produit après passage dans le module de mise en forme spectro-temporel 110 et l'ensemble de la chaine amplificatrice et du compresseur 170, un train d'impulsions comprimées 17 de durée D1, D2, D3, D4 variable en fonction de la modulation en énergie des impulsions source imposée par l'injecteur 100. De plus, chaque impulsion comprimée 17 a une énergie E11, E12, E13, E14 qui est variable en fonction de l'énergie des impulsions source E1, E2, E3, E4 respectivement.

La Figure 9 montre schématiquement un exemple de système laser pour la production d'un train d'impulsions modulée en durée selon la présente divulgation.

L'ajustement de l'énergie d'une impulsion incidente dans le dernier amplificateur 150 modifie la quantité d'auto-modulation de phase induite dans ce dernier amplificateur 150. Afin de conserver la durée comprimée minimale il convient alors d'ajuster le facteur d'amplification du dernier amplificateur, ce qui permet d'ajuster l'énergie de l'impulsion comprimée 17 en sortie du compresseur. Ainsi, la présente divulgation propose une méthode pour légèrement modifier l'énergie de l'impulsion comprimée 17 tout en gardant la durée minimale autorisée par les caractéristiques en phase et en amplitude de l'impulsion amplifiée, par exemple en modifiant le gain du premier amplificateur optique 130, par exemple en diminuant ce gain, et de compenser cette variation en modifiant gain du dernier amplificateur optique 150, en l'occurrence en l'augmentant. L'automodulation de phase n'étant pas créée exactement au même niveau dans la chaine d'amplification, on peut montrer théoriquement et observer expérimentalement que l'énergie finale donnant la compression optimum est obtenue pour une énergie plus grande lorsque le gain du pré-amplificateur est diminué et celui de l'amplificateur final augmenté.

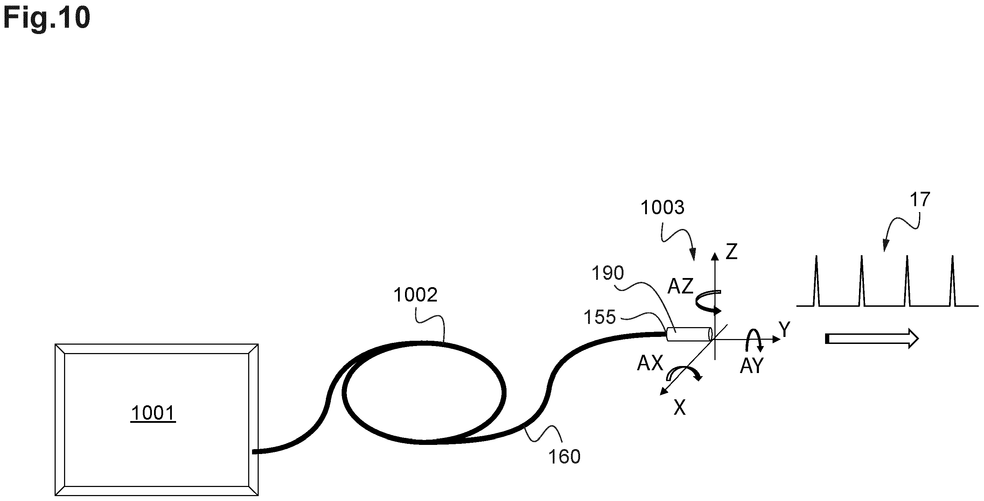

Afin de permettre une utilisation aisée de l'invention, le segment final constitué d'une fibre passive 360 et du dernier amplificateur 150 à fibre est inséré dans une gaine 160 souple. La gaine 160 est métallique ou en polymère ou dans une association de matériaux adaptée pour apporter une protection contre les chocs et tractions sur les fibres. Cette gaine a un diamètre typique de 1 à 9 mm et un rayon de courbure minimal inférieur à 50 cm. De préférence, le diamètre de la gaine 160 est inférieur à 6 mm et le rayon de courbure minimal inférieur à 10 cm. La gaine 160 est solidement accrochée, d'un côté, au corps 1001 du laser (comprenant l'injecteur 100, le module de mise en forme spectro-temporel 110 et éventuellement un ou plusieurs autres étages d'amplification et de filtrage spectral) et, de l'autre côté, au corps mécanique 190 supportant le compresseur 17. Les fibres optiques peuvent se déplacer librement dans la gaine 160 y compris la soudure entre le tronçon de fibre passive 360 et de fibre active 150. L'extrémité distale du dernier amplificateur optique 150 est fixée au corps mécanique entourant le compresseur 17 (voir figure 10 par exemple).

Le système décrit ici est utilisable dans de nombreuses applications qui nécessitent des impulsions lasers ultra-brèves et intenses. En particulier toutes les applications de micro-usinage bénéficient de la flexibilité due à la souplesse de la fibre optique du dernier amplificateur pour la délivrance du faisceau laser en n'importe quel point d'une scène et sous une incidence quelconque tout en maintenant la capacité de focaliser à la limite de diffraction des impulsions ayant une durée de moins de 3 ps.

Par exemple un robot industriel peut être équipé avec le système laser de la présente divulgation. L'injecteur 100, le module de mise en forme spectro-temporel 110, les éventuels préamplificateurs et le coupleur de pompe 351, ainsi que les diodes laser de pompe et l'ensemble des cartes électronique d'alimentation et de pilotage sont inclus dans un boitier source 1001 comme illustré sur la figure 10. Un module de transport actif 1002 comporte un tronçon de fibre passive 360 et un tronçon court de fibre active formant le dernier amplificateur optique 150 dans une gaine 160 mécanique souple solidement fixée d'un coté au boitier source 1001 et l'autre au module de compression 1003. Le module de transport actif 1001 possède un rayon de courbure dans une direction quelconque minimum de 10 cm, possiblement de 3 cm. Le module de compression 1003 comprend le compresseur 17 et son corps mécanique 190 de support. Le module de compression 1003 permet de comprimer la durée d'une impulsion source 10 typiquement comprise entre 30 et 100 ps à une durée d'impulsion comprimée 17 inférieures à 3 ps. Le module de compression 1003 est par exemple fixé à l'extrémité d'un bras du robot qui permet de le déplacer dans toutes les positions et directions autour de la pièce à traiter. La qualité du faisceau issu du compresseur étant limitée par la diffraction, on obtient un diamètre de tache focale inférieur à 5 µm sur un champ de plus de 1 m² et à une distance de travail variable pouvant atteindre plus de 1 m tout en conservant une tache focale de diamètre inférieur à 100 µm.

L'invention trouve des applications dans le micro-usinage d'écrans plats ou de panneaux de cellules solaires de plusieurs mètres de côté sans avoir à déplacer le panneau ou l'écran par rapport au laser, seule l'extrémité à fibre reliée au compresseur se déplaçant.

L'invention est particulièrement adaptée pour la fabrication de moules industriels de grandes dimensions avec des micro-structurations.

Finalement, ce système laser permet de concevoir des dispositifs médicaux pour l'ablation de tissus, comme par exemple la découpe de capot dans la chirurgie corrective de la myopie, la chirurgie de la cataracte assistée par laser, le détatouage cutané ou à tout autre dispositif médical ou de traitement dermatologique utilisant des impulsions brèves. En particulier, il est possible de concevoir une pièce à main, tenue par le chirurgien qui focalise des impulsions de durée inférieure à 3 ps sur des taches de moins de 5 µm quels que soit les mouvements de la main du chirurgien.

L'utilisation de ce système laser n'est évidemment pas limité aux exemples cités ci-dessus.

Bien entendu, diverses autres modifications peuvent être apportées à l'invention dans le cadre des revendications annexées.

## Revendications

1. Système laser à fibre optique comprenant un injecteur (100) adapté pour générer au moins une impulsion source (10) de durée comprise entre 30 et 100 picosecondes et ayant une largeur de bande spectrale source, un module de mise en forme spectro-temporel (110) disposé en sortie de l'injecteur (100), le module de mise en forme spectro-temporel (110) comprenant une fibre optique monomode passive ayant une longueur comprise entre 100 mètres et 1 kilomètre, la fibre optique monomode passive ayant une longueur physique en mètres comprise entre 6 et 12 fois la durée de l'impulsion source en picosecondes, le module de mise en forme spectro-temporel (110) étant configuré pour recevoir l'impulsion source (10) et générer une impulsion élargie spectralement (11) ayant une largeur de bande spectrale 5 à 50 fois plus large que la largeur de bande spectrale source et une durée inférieure à 1,5 fois la durée de l'impulsion source (10), un système amplificateur optique (130, 150) à base de fibre(s) optique(s) monomode(s) flexible(s), le système amplificateur optique (130, 150) ayant une longueur de fibre optique flexible supérieure à un mètre, le système amplificateur optique comprenant au moins un dernier amplificateur (150) à fibre optique, le dernier amplificateur (150) ayant une longueur inférieure à dix mètres, au moins un dernier filtre spectral (140) disposé en aval du module de mise en forme spectro-temporel (110) et en amont du dernier amplificateur (150) à fibre optique, le dernier filtre spectral (140) ayant une largeur de bande spectrale inférieure à 50 nm et supérieure ou égale à la largeur de bande spectrale de l'impulsion lumineuse élargie spectralement, de manière à limiter la génération d'un signal Raman dans le dernier amplificateur (150) à fibre optique, le dernier amplificateur (150) étant adapté pour recevoir une impulsion filtrée (14) issue du filtre spectral (120) et générer une impulsion amplifiée (15) à dérive de fréquence contrôlée à une extrémité (155) du dernier amplificateur (150), l'extrémité (155) du dernier amplificateur (150) à fibre optique étant flexible autour d'au moins deux axes de rotation transverses à l'axe optique avec un rayon de courbure minimum inférieur à 50 cm, l'impulsion amplifiée (15) ayant une énergie supérieure à 1 microjoule, un compresseur (170) volumique fixé à l'extrémité (15) du dernier amplificateur (150) à fibre optique, le compresseur (170) ayant une dérive de fréquence quasi-linéaire prédéterminée, le compresseur (170) étant adapté pour recevoir l'impulsion amplifiée (15) et former une impulsion comprimée (17) de durée inférieure à 3 picosecondes, et des moyens électroniques de réglage de durée de l'impulsion comprimée, lesdits moyens électroniques de réglage de durée étant constitués par des moyens de réglage en énergie (180) adaptés pour ajuster l'énergie de l'impulsion source (10) et/ou de l'impulsion amplifiée (15), la durée de l'impulsion comprimée (17) étant accordable en fonction du réglage en énergie.

2. Système laser à fibre selon la revendication 1 dans lequel l'injecteur (100) comporte en outre un sélecteur d'impulsion (230) ou un atténuateur optique (260) ou un modulateur électro-optique ou un modulateur acousto-optique (270) ou toute combinaison de ces éléments et dans lequel les moyens de réglage en énergie (180) sont adaptés pour ajuster l'énergie de l'impulsion source (10) au moyen du sélecteur d'impulsion (230), de l'atténuateur optique (260), du modulateur électro-optique ou du modulateur acousto-optique (270), respectivement ou de leur combinaison.

3. Système laser selon la revendication 1 ou 2 dans lequel les moyens électroniques de réglage de durée de l'impulsion comprimée comprennent des moyens d'ajustement en énergie du système amplificateur optique (130, 150).

4. Système laser selon la revendication 3 dans lequel le système amplificateur optique (130, 150) comprend au moins une diode de pompe adaptée pour générer un rayonnement de pompe et dans lequel les moyens d'ajustement en énergie du système amplificateur optique (130, 150) sont adaptés pour ajuster un courant électrique de la diode de pompe de manière à ajuster le rayonnement de pompe injecté dans le système amplificateur optique (130, 150).

5. Système laser à fibre selon l'une des revendications 1 à 4 le système amplificateur optique (130, 150) est à base de fibre(s) optique(s) à saut d'indice et/ou de fibre(s) optique(s) à structure de cristaux photoniques ayant un cœur solide et une gaine de guidage formée de capillaires disposés en anneau autour du cœur.

6. Système laser à fibre selon l'une des revendications 1 à 5 dans lequel le système amplificateur optique (130, 150) comporte une fibre optique double gaine.

7. Système laser à fibre selon l'une des revendications 1 à 6 dans lequel le système amplificateur comporte une dernière fibre optique monomode passive (360) disposée en amont du dernier amplificateur (150) à fibre optique flexible.

8. Système laser à fibre selon l'une des revendications 1 à 7 dans lequel le dernier amplificateur (150) a une longueur inférieure à un mètre ou à deux mètres.

9. Système laser à fibre selon l'une des revendications 1 à 8 dans lequel le système amplificateur comporte un premier amplificateur (130) à fibre optique flexible disposé en amont du dernier amplificateur (150) et un premier filtre spectral (120) disposé en aval du module de mise en forme spectro-temporel (110) et en amont du premier amplificateur (130).

10. Système laser à fibre selon l'une des revendications 1 à 9 dans lequel le dernier amplificateur (150) et/ou le premier amplificateur (130) comporte une fibre optique ayant un cœur à base de silice dopé d'ions terre rare choisi parmi les ions suivants : ytterbium, néodyme, erbium- ytterbium, holmium, thulium, ytterbium-thulium.

11. Système laser à fibre selon l'une des revendications 1 à 10 dans lequel le compresseur (17) comporte deux réseaux à pas fixe ou un réseau de Bragg en volume dispersif à pas variable continument.

12. Système laser à fibre selon l'une des revendications 1 à 11 comprenant une gaine (160) mécanique de protection flexible disposée autour du dernier amplificateur (150) et de la fibre passive (360) et attachée mécaniquement au compresseur (170).

13. Système laser à fibre selon l'une des revendications 1 à 12 dans lequel les moyens de réglage en énergie (180) sont adaptés pour ajuster l'énergie de chaque impulsion source (10) individuellement afin de faire varier la durée comprimée de chaque impulsion amplifiée (17) individuellement.

14. Système laser à fibre selon l'une des revendications 1 à 13 dans lequel la durée de l'impulsion comprimée est décroissante en fonction de l'énergie croissante de l'impulsion source dans une gamme de variation de ±40% de l'énergie de l'impulsion source.

15. Utilisation d'un système laser à fibre optique selon l'une des revendications 1 à 14 dans un dispositif de micro-usinage, un dispositif médical, un dispositif de chirurgie ophtalmique ou un dispositif de détatouage cutané.

## Patentansprüche

1. Lasersystem mit optischer Faser mit einem Injektor (100), der dazu ausgelegt ist, mindestens einen Quellenimpuls (10) mit einer Dauer zwischen 30 und 100 Pikosekunden und einer spektralen Quellenbandbreite zu erzeugen, einem am Ausgang des Injektors (100) angeordneten Modul für eine Formgebung hinsichtlich des Spektrums und der Zeit (110), wobei das Modul für eine Formgebung hinsichtlich des Spektrums und der Zeit (110) eine passive optische Monomode-Faser aufweist, die eine Länge zwischen 100 m und 1 km hat, wobei die passive optische Monomode-Faser eine physische Länge in Metern aufweist, die zwischen dem 6-fachen und dem 12-fachen der Dauer des Quellenimpulses in Pikosekunden beträgt, wobei das Modul für eine Formgebung hinsichtlich des Spektrums und der Zeit (110) dazu ausgelegt ist, den Quellenimpuls (10) zu empfangen und einen spektral gedehnten Impuls (11) zu erzeugen, der eine 5- bis 50-mal größere Bandbreite als die Bandbreite des Quellenimpulses und eine weniger als das 1,5-fache der Dauer des Quellenimpulses (10) betragende Dauer hat, einem optischen Verstärkersystem (130, 150) auf der Grundlage von einer oder mehreren flexiblen optischen Monomode-Fasern, wobei das optische Verstärkersystem (130, 150) eine Länge der flexiblen optischen Faser von mehr als einem Meter hat, wobei das optische Verstärkersystem mindestens einen letzten Verstärker (150) mit optischer Faser aufweist, wobei der letzte Verstärker (150) eine Länge von weniger als zehn Metern hat, mindestens einem nach dem Modul für eine Formgebung hinsichtlich des Spektrums und der Zeit (110) und vor dem letzten Verstärker (150) mit optischer Faser angeordneten letzten Spektralfilter (140), wobei der letzte Spektralfilter (140) eine spektrale Bandbreite von weniger als 50 nm und mehr als oder gleich der spektralen Bandbreite des spektral verbreiterten Leuchtimpulses aufweist, um die Erzeugung eines Ramansignals im letzten Verstärker (150) mit optischer Faser zu begrenzen, wobei letzterer Verstärker (150) dazu ausgelegt ist, einen vom Spektralfilter (120) kommenden gefilterten Impuls (14) zu empfangen und einen verstärkten Impuls (15) mit gesteuerter Frequenzverschiebung an einem Ende (155) des letzten Verstärkers (150) zu erzeugen, wobei das Ende (155) des letzten Verstärkers (150) mit optischer Faser um mindestens zwei zur optischen Achse quer liegende Drehachsen mit einem minimalen Biegungsradius von weniger als 50 cm biegsam ist, wobei der verstärkte Impuls (15) eine Energie von mehr als 1 Mikrojoule aufweist, einem am Ende (15) des letzten Verstärkers (150) mit optischer Faser befestigten Volumenkompressor (170), wobei der Kompressor (170) eine vorbestimmte quasilineare Frequenzverschiebung hat, wobei der Kompressor (170) dazu ausgelegt ist, den verstärkten Impuls (15) zu empfangen und einen komprimierten Impuls (17) mit einer Dauer von weniger als 3 Pikosekunden zu erzeugen, und elektronischen Mitteln zum Regeln der Dauer des komprimierten Impulses, wobei die elektronischen Mittel zum Regeln der Dauer aus Energieregelungsmitteln (180) bestehen, die dazu ausgelegt sind, die Energie des Quellenimpulses (10) und/oder des verstärkten Impulses (15) einzustellen, wobei die Dauer des komprimierten Impulses (17) in Abhängigkeit von der Energieregelung abstimmbar ist.

2. Lasersystem mit Faser gemäß Anspruch 1, bei dem der Injektor (100) außerdem einen Impulswähler (230) oder einen optischen Dämpfer (260) oder einen elektrooptischen Modulator oder einen elektroakustischen Modulator (270) oder jegliche Kombination dieser Elemente aufweist und bei dem die Energieregelungsmittel (180) dazu ausgelegt sind, die Energie des Quellenimpulses (10) mittels des Impulswählers (230), des optischen Dämpfers (260) oder des elektrooptischen Modulators oder des elektroakustischen Modulators (270) oder jeglicher Kombination dieser Elemente einzustellen .

3. Lasersystem mit Faser gemäß Anspruch 1 oder 2, bei dem die elektronischen Mittel zum Einstellen der Dauer des komprimierten Impulses Mittel zum Einstellen der Energie des optischen Verstärkersystems (130, 150) aufweisen.

4. Lasersystem mit Faser gemäß Anspruch 3, bei dem das optische Verstärkersystem (130, 150) mindestens eine Pumpdiode aufweist, die dazu ausgelegt ist, eine Pumpstrahlung zu erzeugen, und bei dem die Mittel zum Einstellen der Energie des optischen Verstärkersystems (130, 150) dazu ausgelegt sind, einen elektrischen Strom der Pumpdiode einzustellen, um die in das optische Verstärkersystem (130, 150) injizierte Pumpstrahlung einzustellen.

5. Lasersystem mit Faser gemäß einem der Ansprüche 1 bis 4, bei dem das optische Verstärkersystem (130, 150) auf einer oder mehreren optischen Fasern mit Indexsprung und/oder einer oder mehreren optischen Fasern mit einer Struktur aus photonischen Kristallen, die einen festen Kern und eine aus ringförmig um den Kern angeordneten Kapillaren gebildete Führungshülse haben, basiert.

6. Lasersystem mit Faser gemäß einem der Ansprüche 1 bis 5, bei dem das optische Verstärkersystem (130, 150) eine optische Faser mit doppelter Hülse aufweist.

7. Lasersystem mit Faser gemäß einem der Ansprüche 1 bis 6, bei dem das Verstärkersystem eine passive letzte optische Monomodefaser (360) aufweist, die vor dem letzten Verstärker (150) mit flexibler optischer Faser angeordnet ist.

8. Lasersystem mit Faser gemäß einem der Ansprüche 1 bis 7, bei dem der letzte Verstärker (150) eine Länge von weniger als ein Meter oder als zwei Meter hat.

9. Lasersystem mit Faser gemäß einem der Ansprüche 1 bis 8, bei dem das Verstärkersystem einen ersten Verstärker (130) mit vor dem letzten Verstärker (150) angeordneter flexibler optischer Faser und einen nach dem Modul für eine Formgebung hinsichtlich des Spektrums und der Zeit (110) und vor dem ersten Verstärker (130) angeordneten ersten Spektralfilter (120) aufweist.

10. Lasersystem mit Faser gemäß einem der Ansprüche 1 bis 9, bei dem der letzte Verstärker (150) und/oder der erste Verstärker (130) eine optische Faser mit einem Kern aus mit Ionen von Seltenen Erden dotiertem Silizium aufweist, wobei die Ionen aus folgenden Ionen ausgewählt sind: Ytterbium, Neodym, Erbium-Ytterbium, Holmium, Thulium, Ytterbium-Thulium.

11. Lasersystem mit Faser gemäß einem der Ansprüche 1 bis 10, bei dem der Kompressor (17) zwei Gitter mit festem Schritt oder ein dispersives Volumen-Bragg-Gitter mit kontinuierlich veränderbarem Schritt aufweist.

12. Lasersystem mit Faser gemäß einem der Ansprüche 1 bis 11 mit einer um den letzten Verstärker (150) und die passive Faser (360) herum gelegten und mechanisch am Kompressor (170) befestigten flexiblen mechanischen Schutzhülse (160).

13. Lasersystem mit Faser gemäß einem der Ansprüche 1 bis 12, bei dem die Mittel (180) zum Regeln der Energie dazu ausgelegt sind, die Energie jedes Quellenimpulses (10) einzeln einzustellen, um die komprimierte Dauer jedes verstärkten Impulses (17) einzeln zu variieren.

14. Lasersystem mit Faser gemäß einem der Ansprüche 1 bis 13, bei dem die Dauer des komprimierten Impulses in Abhängigkeit von der zunehmenden Energie des Quellenimpulses in einem Variationsbereich von ± 40 % der Energie des Quellenimpulses abnimmt.

15. Verwendung eines Lasersystems mit optischer Faser gemäß einem der Ansprüche 1 bis 14 in einer Mikrobearbeitungsvorrichtung, einer medizinischen Vorrichtung, einer augenchirurgischen Vorrichtung oder einer Vorrichtung zum Entfernen einer Hauttätowierung.

## Claims

1. An optical-fibre laser system comprising an injector (100) suitable for generating at least one source pulse (10) of duration between 30 and 100 picoseconds and having a source spectral bandwidth, a spectro-temporal shaping module (110) arranged at the output of the injector (100), the spectro-temporal shaping module (110) comprising a passive single-mode optical fibre having a length between 100 metres and 1 kilometre, the passive single-mode optical fibre having a physical length in metres that is between 6 and 12 times the duration of the source pulse in picoseconds, the spectro-temporal shaping module (110) being configured to receive the source pulse (10) and to generate a spectrally broadened pulse (11) having a spectral bandwidth 5 to 50 times broader than the source spectral bandwidth and a duration of less than 1.5 times the source pulse (10) duration, an optical amplifier system (130, 150) with flexible single-mode optical-fibre(s), the optical amplifier system (130, 150) having a flexible optical fibre length longer than one metre, the optical amplifier system comprising at least one last optical fibre amplifier (150), the last amplifier (150) having a length of less than ten metres, at least one last spectral filter (140) arranged downstream from the spectro-temporal shaping module (110) and upstream from the last optical fibre amplifier (150), the last spectral filter (140) having a spectral bandwidth of less than 50 nm and higher than or equal to the spectral bandwidth of the spectrally broadened light pulse, in such a way as to limit the generation of a Raman signal in the last optical-fibre amplifier (150), the last amplifier (150) being suitable for receiving a filtered pulse (14) from the spectral filter (120) and for generating a controlled chirped amplified pulse (15) at one end (155) of the last amplifier (150), the end (155) of the last optical-fibre amplifier (150) being flexible about at least two axes of rotation transverse to the optical axis, with a minimum bending radius of less than 50 cm, the amplified pulse (15) having an energy of more than 1 microjoule, a volume compressor (170) attached to the end (155) of the last optical-fibre amplifier (150), the compressor (170) having a predetermined almost-linear chirp, the compressor (170) being suitable for receiving the amplified pulse (15) and forming a compressed pulse (17) of less than 3 picoseconds duration, and electronic means for adjusting the compressed pulse duration, said electronic duration adjustment means being consisted of energy adjustment means (180) suitable for adjusting the energy of the source pulse (10) and/or of the amplified pulse (15), the duration of the compressed pulse (17) being tunable based on the energy setting.

2. The fibre laser system according to claim 1, wherein the injector (100) further includes a pulse selector (230) or an optical attenuator (260) or an electro-optic modulator or an acousto-optic modulator (270) or any combination of these elements and wherein the energy adjustment means (180) are suitable for adjusting the energy of the source pulse (10) by means of the pulse selector (230), the optical attenuator (260), the electro-optic modulator or the acousto-optic modulator (270), respectively, or the combination thereof.

3. The laser system according to claim 1 or 2, wherein the electronic means for adjusting the duration of the compressed pulse comprise means for adjusting the energy of the optical amplifier system (130, 150).

4. The laser system according to claim 3, wherein the optical amplifier system (130, 150) comprises at least one pump diode suitable for generating a pump radiation and wherein the means for adjusting the energy of the optical amplifier system (130, 150) are suitable for adjusting an electrical current of the pump diode in such a way as to adjust the pump radiation injected into the optical amplifier system (130, 150).

5. The fibre laser system according to any one of claims 1 to 4, wherein the optical amplifier system (130, 150) is based on step-index optical fibre(s) and/or photonic-crystal-structure optical fibre(s) having a solid core and a guiding cladding formed of capillaries arranged in a ring around the core.

6. The fibre laser system according to any one of claims 1 to 5, wherein the optical amplifier system (130, 150) includes a double-cladding optical fibre.

7. The fibre laser system according to any one of claims 1 to 6, wherein the amplifier system includes a last passive single-mode optical fibre (360) arranged upstream from the last flexible optical-fibre amplifier (150).

8. The fibre laser system according to any one of claims 1 to 7, wherein the last amplifier (150) has a length of less than one metre or two metres.

9. The fibre laser system according to any one of claims 1 to 8, wherein the amplifier system includes a first flexible optical-fibre amplifier (130) arranged upstream from the last amplifier (150) and a first spectral filter (120) arranged downstream from the spectro-temporal shaping module (110) and upstream from the first amplifier (130).

10. The fibre laser system according to any one of claims 1 to 9, wherein the last amplifier (150) and/or the first amplifier (130) includes an optical fibre having a core based on silica doped with rare earth ions, chosen among the following ions: ytterbium, neodymium, erbium-ytterbium, holmium, thulium, ytterbium-thulium.

11. The fibre laser system according to any one of claims 1 to 10, wherein the compressor (17) includes two fixed-pitch gratings or a dispersive volume Bragg grating with continuously variable pitch.

12. The fibre laser system according to any one of claims 1 to 11, comprising a flexible protective mechanical cladding (160) arranged around the last amplifier (150) and the passive fibre (360) and mechanically attached to the compressor (170).

13. The fibre laser system according to any one of claims 1 to 12, wherein the energy adjustment means (180) are suitable for adjusting the energy of each source pulse (10) individually in order to vary the compressed duration of each individually amplified pulse (17).

14. The fibre laser system according to any one of claims 1 to 13, wherein the duration of the compressed pulse decreases as a function of the increasing energy of the source pulse in a variation range of ±40% of the source pulse energy.

15. The use of an optical-fibre laser system according to any one of claims 1 to 14 in a micro-machining device, a medical device, an ophthalmic surgery device or a skin tattoo removal device.
